# EUROPEAN PATENT APPLICATION

(11) **EP 2 965 931 A1**
(43) Date of publication of application: **13.01.2016**
(21) Application number: 14759689.4
(22) Date of filing: 05.03.2014
(51) Int. Cl.: B60H 1/03, B60H 1/08, F25B 1/00

(54) **VEHICLE AIR CONDITIONING DEVICE**

(30) Priority: 06.03.2013 JP 2013044139
(71) Applicant: Panasonic Intellectual Property Management Co., Ltd., Osaka-shi, Osaka 540-6207 (JP)
(72) Inventor: TERADA, Tomohiro, 2-1-61, Shiromi, Chuo-ku, Osaka-shi Osaka 540-6207 (JP); NODA, Yoshitoshi, 2-1-61, Shiromi, Chuo-ku, Osaka-shi Osaka 540-6207 (JP); TANIGUCHI, Katsuji, 2-1-61, Shiromi, Chuo-ku, Osaka-shi Osaka 540-6207 (JP); KURODA, Kentaro, 2-1-61, Shiromi, Chuo-ku, Osaka-shi Osaka 540-6207 (JP)
(74) Representative: Schwabe - Sandmair - Marx
(86) International application number: PCT/JP2014/001200
(87) International publication number: WO 2014/136447

(57) **Abstract**

The vehicle air conditioning device is equipped with: a heater core that imparts heat to air flowing to the vehicle cabin interior by flowing a high temperature cooling liquid; a first water-refrigerant heat exchanger that exchanges heat between the cooling liquid and the high-temperature, high-pressure refrigerant in a heat pump, thus condensing the refrigerant; a flow rate adjustment means that adjusts the flow rate of the cooling liquid flowing through the heater core and the first water-refrigerant heat exchanger; and a control unit that performs air conditioning control. The control unit controls the flow rate adjustment means, and adopts a configuration that for a predetermined time period from the starting up of the heat pump, sets the flow rate of the cooling liquid to a second flow rate that is lower than a first flow rate during standard operating.

## Description

### Technical Field

The present invention relates to a vehicle air conditioning apparatus.

### Background Art

Conventionally, a vehicle air conditioning apparatus is proposed which provides cooling or heating for the vehicle interior using a heat pump (e.g., see PTL 1).

Furthermore, there is conventionally a vehicle air conditioning apparatus that provides heating for the vehicle interior using heat of an engine coolant. There is also a proposal of a vehicle air conditioning apparatus which heats an engine coolant with a high-temperature and high-pressure refrigerant of a heat pump and provides heating for the vehicle interior using this coolant (e.g., FIG 18 of PTL 1).

### Citation List

### Patent Literature

PTL 1
Japanese Patent Application Laid-Open No. 8-197937

### Summary of Invention

### Technical Problem

However, the conventional vehicle air conditioning apparatus that provides heating for the vehicle interior using heat of an engine coolant has a problem that heating of the vehicle interior is not possible when the temperature of the engine coolant is not high.

As engines are becoming more and more efficient in recent years, there are vehicles in which the temperature of an engine coolant does not increase so much even when the engine is operating. In the case of a no-idling vehicle, HEV (hybrid electric vehicle), P-HEV (plug-in hybrid electric vehicle) or the like, the engine operates intermittently, and situations often occur in which the temperature of the engine coolant does not become so high.

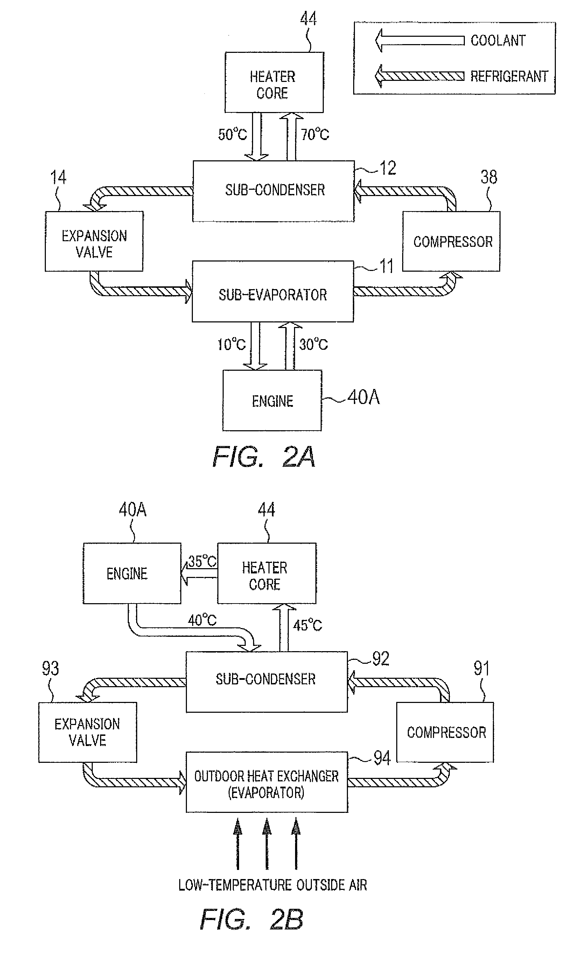

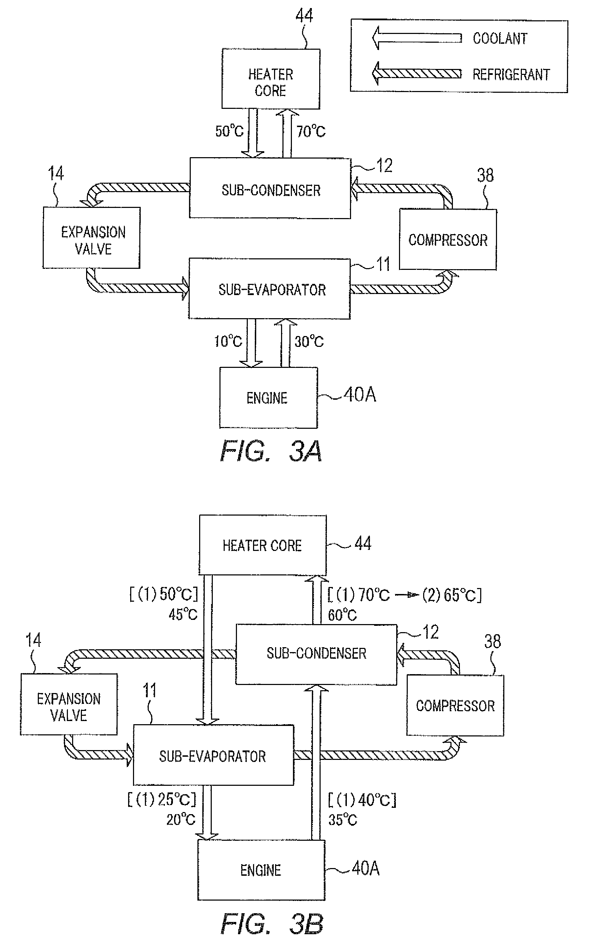

On the other hand, the conventional vehicle air conditioning apparatus, which further heats the engine coolant with the high-temperature and high-pressure refrigerant of the heat pump and provides heating for the vehicle interior with this coolant, can provide heating for the vehicle interior even in a situation in which the temperature of the engine coolant does not become so high. However, when the outside temperature is low and the temperature of the engine coolant is not so high, it has been proven that the heating efficiency of such a vehicle air conditioning apparatus deteriorates (details thereof will be described later using FIGS. 2A and 2B, and FIGS. 3A and 3B).

Such a problem may likewise occur when waste heat is available from heat-generating parts other than the engine such as a secondary battery for supplying driving power or driving electric motor in an electric vehicle and used for heating.

An object of the present invention is to provide a vehicle air conditioning apparatus capable of providing heating for the vehicle interior with high efficiency even when an outside air temperature is low and not much waste heat is available from heat-generating parts of the vehicle.

### Solution to Problem

A vehicle air conditioning apparatus according to an aspect of the present invention includes: a heater core through which a high-temperature coolant flows and which gives heat to air to be sent into a vehicle interior; a first water-refrigerant heat exchanger that exchanges heat between the coolant and a high-temperature and high-pressure refrigerant in a heat pump to condense the refrigerant; a flow rate adjusting section that adjusts a flow rate of the coolant that flows through the first water-refrigerant heat exchanger and the heater core; and a control section that performs air conditioning control, in which the control section controls the flow rate adjusting section to set the flow rate of the coolant to a flow rate lower than a first flow rate for a predetermined time period from starting up of the heat pump, the flow rate being referred to as a second flow rate, the first flow rate being used during a standard operation.

### Advantageous Effects of Invention

According to the present invention, it is possible to provide heating for the vehicle interior with high efficiency even when an outside temperature is low and not much waste heat is available from a heat-generating part of the vehicle.

### Brief Description of the Drawings

FIG. 1 illustrates a basic configuration which is a prerequisite for a vehicle air conditioning apparatus according to an embodiment of the present invention;
FIGS. 2A and 2B are diagrams provided for describing heating efficiency of the vehicle air conditioning apparatus in FIG. 1 (FIG. 2A) and related art (FIG. 2B);
FIGS. 3A and 3B illustrate heating efficiency of the vehicle air conditioning apparatus in FIG. 1 (FIG. 3A) and a comparative example (FIG. 3B);
FIG. 4 is a configuration diagram illustrating the vehicle air conditioning apparatus according to the embodiment of the present invention;
FIG. 5 is a flowchart illustrating a procedure of an air conditioning control process in the vehicle air conditioning apparatus of the embodiment;
FIG. 6 is a flowchart illustrating a detailed procedure of the WP1 number of revolutions instruction process in FIG. 5;
FIG. 7 is a data table illustrating a relationship between an outside air temperature and a WP1 stopping water temperature;
FIG. 8 is a graph for describing an example of an air conditioning control process; and
FIG. 9 illustrates a variation of the vehicle air conditioning apparatus of the embodiment.

### Description of Embodiment

Before describing a specific configuration and operation of an embodiment according to the present invention, a basic configuration focused by the present inventor et al. will be described as a configuration of a vehicle air conditioning apparatus capable of providing heating for the vehicle interior with high efficiency even when waste heat is available not so much from heat-generating parts of the vehicle first.

### (Basic Configuration)

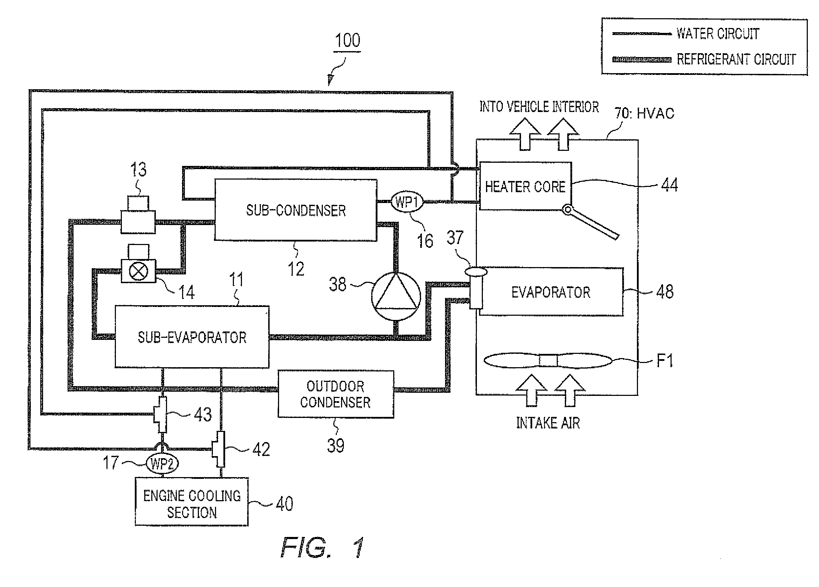

FIG. 1 illustrates a basic configuration serving as a premise for the vehicle air conditioning apparatus according to the embodiment of the present invention. In the respective configuration diagrams of the present application, a water circuit denotes a path through which a coolant flows.

Vehicle air conditioning apparatus 100 in FIG. 1 is an apparatus mounted on a vehicle including a heat-generating part (e.g., engine (internal combustion engine)) for providing heating, dehumidification and cooling for the vehicle interior.

Vehicle air conditioning apparatus 100 is provided with compressor 38, engine cooling section 40, three-way valves 42 and 43, heater core 44, evaporator 48, expansion valve 37, outdoor condenser 39, sub-evaporator (corresponding to second water-refrigerant heat exchanger) 11, sub-condenser (corresponding to first water-refrigerant heat exchanger) 12, on-off valve 13, electromagnetic-valve-equipped expansion valve 14, water pump (corresponding to flow rate adjusting section) 16, and coolant and coolant pipes connecting between these components. Heater core 44 and evaporator 48 are arranged in an intake air passage of a heating, ventilation, and air conditioning (HVAC) 70. HVAC 70 is provided with blower fan F1 through which intake air flows.

Compressor 38 is driven by electric power, compresses a suctioned refrigerant to a high temperature and high pressure, and discharges the refrigerant.

Engine cooling section 40 is provided with a water jacket that circulates a coolant around the engine and water pump 17 that circulates the coolant through the water jacket, and discharges heat from the engine into the coolant that flows through the water jacket. Water pump 17 rotates by engine power, for example. Engine cooling section 40 may be provided with a radiator that discharges heat into outside air when the amount of waste heat of the engine increases.

Heater core 44 is a device that exchanges heat between the coolant and air and is placed in an intake air passage of HVAC 70 that supplies air into the vehicle interior. Heater core 44 is supplied with the heated coolant and radiates heat into the intake air to be sent into the vehicle interior during heating operation.

Three-way valves 42 and 43 are valves that switch whether the passage of the coolant of engine cooling section 40 communicates with sub-evaporator 11 or communicates with heater core 44. Note that the section that performs this switching is not limited to the three-way valves, but can be constructed of a combination of a plurality of valves. Three-way valves 42 and 43 can perform the above-described switching under electrical control, for example.

Evaporator 48 is a device that exchanges heat between a low-temperature and low-pressure refrigerant and air, and is placed in the intake air passage of HVAC 70. Evaporator 48 is supplied with the low-temperature and low-pressure refrigerant during cooling operation or dehumidification operation and cools the intake air to be supplied into the vehicle interior.

Expansion valve 37 expands a high-pressure refrigerant to a low temperature and low pressure and discharges the refrigerant to evaporator 48. Expansion valve 37 is placed in proximity to evaporator 48.

Outdoor condenser 39 has a passage for the flow of the refrigerant and a passage for the flow of the air, is placed near the front of the vehicle in the engine room, for example, and exchanges heat between the refrigerant and outside air. A high-temperature and high-pressure refrigerant flows through outdoor condenser 39 in a cooling mode or a dehumidification mode, and discharges heat from the refrigerant to the outside air. The outside air is blown over outdoor condenser 39 by a fan, for example.

Sub-evaporator 11 includes a passage for the flow of the low-temperature and low-pressure refrigerant and a passage for the flow of the coolant, and exchanges heat between the refrigerant and the coolant. Sub-evaporator 11 is supplied with the low-temperature and low-pressure refrigerant in a predetermined operating mode, and with the coolant cyclically circulating to/from engine cooling section 40, transfers heat from the coolant to the low-temperature and low-pressure refrigerant.

Sub-condenser 12 includes a passage for the flow of the high-temperature and high-pressure refrigerant and a passage for the flow of the coolant, and exchanges heat between the refrigerant and the coolant. With the coolant cyclically circulating to/from heater core 44 in a predetermined operating mode, sub-condenser 12 discharges heat from the high-temperature and high-pressure refrigerant into the coolant.

The refrigerant pipe on the outlet side of sub-condenser 12 is bifurcated, one is connected to outdoor condenser 39 via on-off valve 13 and the other is connected to sub-evaporator 11 via electromagnetic-valve-equipped expansion valve 14.

Water pump 16 may be, for example, a pump driven by an electric motor and capable of circulating the coolant between sub-condenser 12 and heater core 44.

The refrigerant pipe on the outlet side of sub-evaporator 11 is connected to a refrigerant suction port of compressor 38. The refrigerant pipe on the outlet side of evaporator 48 is also joined and connected to the refrigerant suction port of compressor 38.

On-off valve 13 is a valve that opens or closes the refrigerant pipe under electrical control, for example.

Electromagnetic-valve-equipped expansion valve 14 is a valve that opens or closes the refrigerant pipe under, for example, electrical control and functions as an expansion valve when it is open. Note that electromagnetic-valve-equipped expansion valve 14 may be substituted by two parts made up of an on-off valve and an expansion valve.

### (Description of Operation of Basic Configuration)

Next, an operation of vehicle air conditioning apparatus 100 in FIG. 1 will be described.

### [Heating Mode of Engine Coolant at Intermediate Temperature]

When an operation in a heating mode while the engine coolant is at an intermediate temperature (e.g., less than 60°C) is requested, on-off valve 13 is closed, electromagnetic-valve-equipped expansion valve 14 is open, water pump 16 is turned on, and the passages of three-way valves 42 and 43 are switched to the sub-evaporator 11 side.

Furthermore, compressor 38 is activated and the refrigerant cyclically flows through sub-condenser 12, electromagnetic-valve-equipped expansion valve 14, sub-evaporator 11 and compressor 38 in that order.

In that case, the high-temperature and high-pressure refrigerant compressed by compressor 38 discharges heat into the coolant in sub-condenser 12 and is condensed. The low-temperature and low-pressure refrigerant expanded by electromagnetic-valve-equipped expansion valve 14 absorbs heat from the coolant in sub-evaporator 11 and is vaporized.

The coolant is divided into two water circuits, flowing independently of each other. The coolant of a first water circuit cyclically flows between engine cooling section 40 and sub-evaporator 11. The coolant of the first water circuit cools the engine in engine cooling section 40 and discharges heat into the low-temperature and low-pressure refrigerant in sub-evaporator 11.

The coolant of the second water circuit cyclically flows between sub-condenser 12 and heater core 44 via water pump 16. The coolant of the second water circuit absorbs heat from the high-temperature and high-pressure refrigerant in sub-condenser 12 and discharges heat into the intake air to be sent into the vehicle interior, in heater core 44.

Heating in the vehicle interior is thereby provided.

### [Dehumidification Mode when Engine Coolant has Intermediate Temperature]

When operation in a dehumidification mode is requested while the engine coolant is at an intermediate temperature (e.g., less than 60°C), the aforementioned engine coolant is changed from the heating mode at an intermediate temperature to a state in which on-off valve 13 is opened.

Due to the switching of this on-off valve 13, in addition to the flow of the refrigerant in the heating mode while the engine coolant is at an intermediate temperature, a flow of the refrigerant is generated, circulating through compressor 38, sub-condenser 12, outdoor condenser 39, expansion valve 37 and evaporator 48 in the order mentioned.

This flow of the refrigerant causes the low-temperature and low-pressure refrigerant to flow through evaporator 48, making it possible to perform dehumidification of the intake air to be sent into the vehicle interior.

### [Heating Mode when Engine Coolant has High Temperature]

When operation in the heating mode is requested while the engine coolant has a high temperature (e.g., 60°C or higher), on-off valve 13 is opened, electromagnetic-valve-equipped expansion valve 14 is closed, water pump 16 is turned off, the passages of three-way valves 42 and 43 are switched to the heater core 44 side.

With this switching, the high-temperature engine coolant flows through heater core 44, making it possible to heat the intake air to be sent into the vehicle interior.

When dehumidification or the like is necessary, compressor 38 is activated and the refrigerant cyclically flows through sub-condenser 12, outdoor condenser 39, expansion valve 37, evaporator 48 and compressor 38 in the order mentioned.

In this case, the high-temperature and high-pressure refrigerant compressed by compressor 38 passes through sub-condenser 12 through which the coolant does not flow with substantially no heat exchange, discharges heat into the outside air in outdoor condenser 39 and is condensed. Next, the low-temperature and low-pressure refrigerant expanded by expansion valve 37 absorbs heart from the intake air to be sent into the vehicle interior and is vaporized in evaporator 48. The intake air can be dehumidified in this way.

### [Cooling Mode]

When an operation in a cooling mode is requested, on-off valve 13 is opened, electromagnetic-valve-equipped expansion valve 14 is closed, water pump 16 is turned off, and compressor 38 is activated. The passages of three-way valves 42 and 43 are switched to the heater core 44 side and the door of heater core 44 is closed. In engine cooling section 40, the coolant is sent to a radiator to discharge heat into the outside air.

This switching generates flow of the refrigerant circulating through compressor 38, sub-condenser 12, outdoor condenser 39, expansion valve 37 and evaporator 48 in that order, supplying a low-temperature and low-pressure refrigerant to evaporator 48.

Thus, the air flowing through HVAC 70 passes through evaporator 48, is cooled and sent into the vehicle interior while bypassing heater core 44, and thereby cooling the vehicle interior.

### [Comparison 1 of Heating Efficiency]

FIGS. 2A and 2B are diagrams provided for describing heating efficiency of the vehicle air conditioning apparatus in FIG. 1 (FIG. 2A) and related art (FIG. 2B) when the engine coolant is at an intermediate temperature. FIGS. 2A and 2B illustrate examples of the stable temperature of the coolant that flows through the respective sections, next to arrows indicating the flow of the coolant.

Here, assuming a situation in which the temperature of engine 40A is not so high and the temperature of outside air is low in combination with no-idling or electric motor driving, a heating mode (FIG. 2A) of the vehicle air conditioning apparatus in FIG. 1 will be compared to a heating mode (FIG. 2B) of the related art.

The related art in FIG. 2B has a configuration forming a heat pump system constructed of compressor 91, water-refrigerant heat exchanger (sub-condenser) 92 that functions as a condenser, expansion valve 93, and outdoor heat exchanger 94 that functions as an evaporator. An engine coolant is heated in water-refrigerant heat exchanger 92 and sent to heater core 44. This configuration corresponds to the configuration in FIG. 18 of PTL 1.

As shown in FIG. 2A, in the heating mode of the vehicle air conditioning apparatus in FIG. 1 when the engine coolant has an intermediate temperature, a coolant having an intermediate temperature is supplied to sub-evaporator 11 that functions as an evaporator. For this reason, sub-evaporator 11 stably and highly efficiently exchanges heat between the low-temperature and low-pressure refrigerant and the coolant, making it possible to easily vaporize the low-temperature and low-pressure refrigerant.

In this way, the heat pump system can efficiently operate and transfer a large amount of heat from sub-evaporator 11 to sub-condenser 12. Thus, sub-condenser 12 is kept at a high temperature, can supply a high-temperature coolant to heater core 44 and sufficiently heat the vehicle interior.

On the other hand, in the related art in FIG. 2B, low-temperature outside air is supplied to outdoor heat exchanger 94 that functions as an evaporator, and it is therefore impossible to stably provide heat to the low-temperature and low-pressure refrigerant and it is difficult to operate the heat pump system with high efficiency.

For this reason, it is difficult to keep water-refrigerant heat exchanger 92 that functions as a condenser at a high temperature. Furthermore, since the temperature of engine 40A is low, the temperature of the coolant circulating through water-refrigerant heat exchanger 92, heater core 44, and engine 40A does not become so high, and heating efficiency in the vehicle interior by heater core 44 deteriorates.

It can be seen from this comparison that the heating mode of the vehicle air conditioning apparatus in FIG. 1 when the engine coolant has an intermediate temperature provides higher heating efficiency than in the related art.

In the related art in FIG. 2B, the amount of coolant flowing through heater core 44 depends on the number of revolutions of the coolant pump of engine 40A. On the other hand, in the vehicle air conditioning apparatus in FIG. 1, the flow rate of the coolant of heater core 44 can be controlled independently of the flow rate of the coolant of engine 40A. Therefore, even when engine 40A is stopped due to no-idling or the like, vehicle air conditioning apparatus 100 in FIG. 1 can cause the coolant to flow through heater core 44 and maintain heating performance in the vehicle interior.

### [Comparison 2 of Heating Efficiency]

FIGS. 3A and 3B are diagrams provided for describing heating efficiency in the vehicle air conditioning apparatus in FIG. 1 (FIG. 3A) and a comparative example (FIG. 3B) when the engine coolant has an intermediate temperature. FIGS. 3A and 3B illustrate exemplary stable temperature of the coolant that flows through the sections next to arrows indicating the flow of the coolant. In FIG. 3B, non-stable temperatures of the coolant are shown in brackets.

The comparative example in FIG. 3B has a heat pump system similar to that of vehicle air conditioning apparatus 100 in FIG. 1 and is configured so as to circulate the coolant through heater core 44, sub-evaporator 11, the cooling path of engine 40A, and sub-condenser 12 in the order mentioned.

In the comparative example in FIG. 3B, suppose a case where compressor 38 is driven in the same way as in FIG. 3A, and a high-temperature (e.g., non-stable temperature (1) 70°C) coolant is supplied to heater core 44 as in the case of FIG. 3A.

In the comparative example in FIG. 3B, the coolant that has passed through heater core 44 is sent to sub-evaporator 11. Therefore, in the case assumed above, the temperature of the coolant inputted to sub-evaporator 11 is higher than that in the case of FIG. 3A (e.g., non-stable temperature (1) 50°C). As a result, the temperature of the coolant that has passed through sub-evaporator 11 and is sent to engine 40A is also higher than that in the case of FIG 3A (e.g., non-stable temperature (1) 25°C).

Here, when the temperature of engine 40A is low, the temperature difference between the coolant sent from sub-evaporator 11 and engine 40A becomes smaller, and therefore the amount of heat discharge from engine 40A to the coolant becomes smaller. Furthermore, in the comparative example in FIG. 3B, the coolant of engine 40A is sent to sub-condenser 12. For this reason, in the case assumed above, the temperature of the coolant inputted to sub-condenser 12 becomes lower than that in the case of FIG. 3A (e.g., non-stable temperature (1) 40°C).

As a result, the coolant outputted from sub-condenser 12 cannot keep the high temperature assumed above and the temperature decreases (e.g., non-stable temperature (2) 65°C).

Through such an operation, the stable temperature of the coolant of each section in the comparative example in FIG. 3B becomes low on the heater core 44 side and becomes high on the engine 40A side compared to the configuration in FIG. 3A. That is, it is seen in the comparative example in FIG. 3B that the heating efficiency deteriorates as compared with that in the heating mode of the engine coolant of vehicle air conditioning apparatus 100 in FIG. 1.

In the comparative example in FIG. 3B, the flow rate of the coolant of heater core 44 depends on the number of revolutions of the coolant pump of engine 40A. On the other hand, vehicle air conditioning apparatus 100 in FIG. 1 can control the flow rate of the coolant of heater core 44 independently of the flow rate of the coolant of engine 40A. Therefore, vehicle air conditioning apparatus 100 in FIG. 1 can cause the coolant to flow into heater core 44 even when engine 40A is stopped due to no-idling or the like, continue heating the vehicle interior and maintain heating performance.

### [Further Problems in Basic Configuration]

As described above, according to vehicle air conditioning apparatus 100 in FIG. 1, it is possible to provide heating for the vehicle interior with high efficiency even when the temperature of the outside air is low and the temperature of the engine coolant is not so high.

However, even in this configuration, if the coolant of sub-condenser 12 is at a very low temperature when the vehicle and vehicle air conditioning apparatus 100 start operating, it takes time until the heat pump operates stably. This may cause a problem that the vehicle interior cannot be speedily heated.

It is an object of the embodiment of the present disclosure to improve a capability of speedily providing heating for the vehicle interior, that is, quick heating performance in the vehicle air conditioning apparatus having the above-described basic configuration.

### (Embodiment)

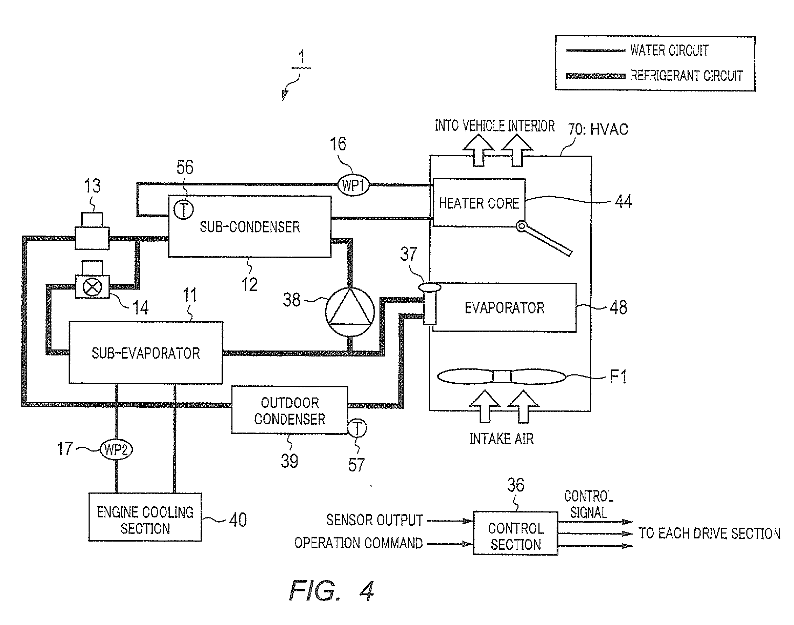

FIG. 4 is a configuration diagram illustrating the vehicle air conditioning apparatus according to the embodiment of the present invention.

In addition to the basic configuration in FIG 1, vehicle air conditioning apparatus 1 according to the embodiment of the present invention includes a new control process. Components similar to those of the basic configuration will be assigned the reference numerals to those used in FIG. 1, and the detailed description thereof will not be repeated. Vehicle air conditioning apparatus 1 according to the embodiment of the present invention includes temperature sensors 56 and 57, and control section 36.

Note that in FIG. 4, the passages of the coolant bifurcated by three-way valves 42 and 43 of the basic configuration are omitted. However, vehicle air conditioning apparatus 1 of the embodiment may include these components.

Control section 36 is, for example, an ECU (electric control unit) dedicated to air conditioning control and receives the output of various sensors and operation commands or the like from a user or the vehicle ECU. Examples of the various sensors include temperature sensors 56 and 57. Control section 36 outputs a control signal for driving each of the drive sections of vehicle air conditioning apparatus 1. Examples of the drive sections include compressor 38, blower fan F1, water pump 16, on-off valve 13, and electromagnetic-valve-equipped expansion valve 14.

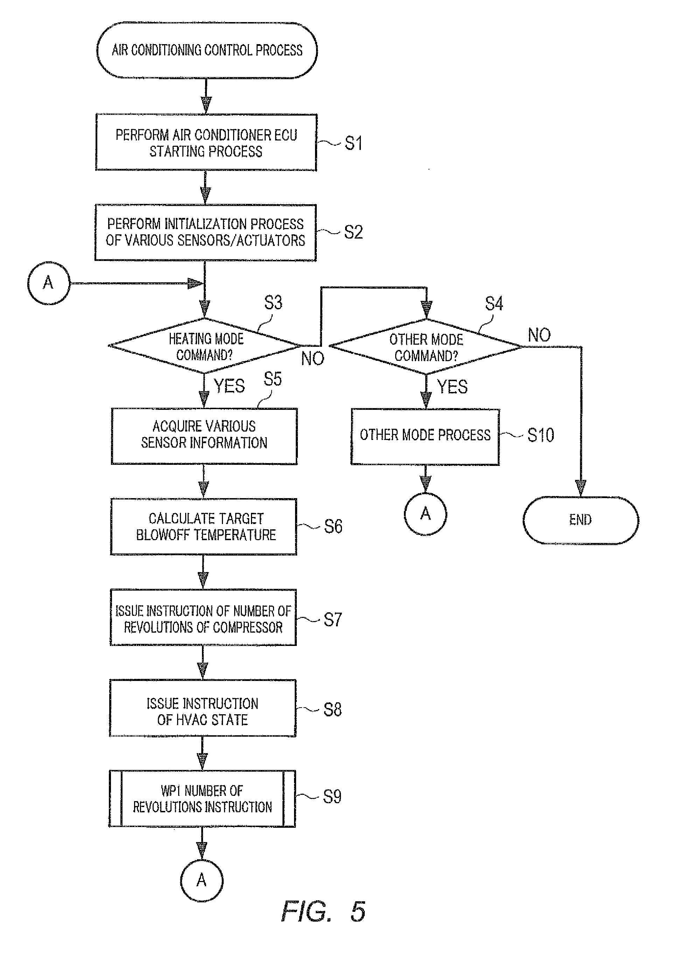

FIG. 5 is a flowchart illustrating a procedure of an air conditioning control process in the vehicle air conditioning apparatus of the embodiment.

The air conditioning control process is started by control section 36, for example, when the vehicle is activated (e.g., when an ignition switch is turned on in the case of an engine vehicle, or when the key is switched on in the case of an electric vehicle).

When the air conditioning control process is started, control section 36 always performs an air conditioner ECU starting process for initializing itself (step S1), and initialization processes of various sensors and actuators (electromagnetic valve, opening/closing door of HVAC 70 or the like) (step S2) and moves on to a subsequent repetitive process.

In the repetitive processes, control section 36 first confirms an operation command from an outside in steps S3 and S4, executes a heating process (step S5 to S9) in the case of a heating mode command or executes a mode process (step S10) corresponding to the command in the case of another command in a cooling mode. In the case of a command for ending the air conditioning operation, control section 36 ends this air conditioning control process.

In a heating process, control section 36 first acquires information from various sensors including temperature sensors 56 and 57 (step S5), and calculates a target temperature at a blowoff port of hot air in the vehicle interior (step S6).

Next, control section 36 calculates the number of revolutions of compressor 38 based on the target blowoff temperature and various kinds of sensor information and instructs the drive circuit of compressor 38 to drive at this number of revolutions (step S7).

Next, control section 36 determines the state of HVAC 70 such as the number of revolutions of blower fan F1 and the amount of opening/closing of the various opening/closing doors based on a target blowoff temperature and the various kinds of sensor information, and instructs the respective drive sections about them (step S8).

Next, control section 36 determines the number of revolutions of water pump (WP1) 16 based on the target blowoff temperature and the various kinds of sensor information, and instructs the drive circuit of water pump 16 to drive at this number of revolutions (step S9).

For a period during which a heating mode command lasts, control section 36 repeatedly executes the heating process in steps S5 to S9 and this repetitive process realizes heating operation of vehicle air conditioning apparatus 1.

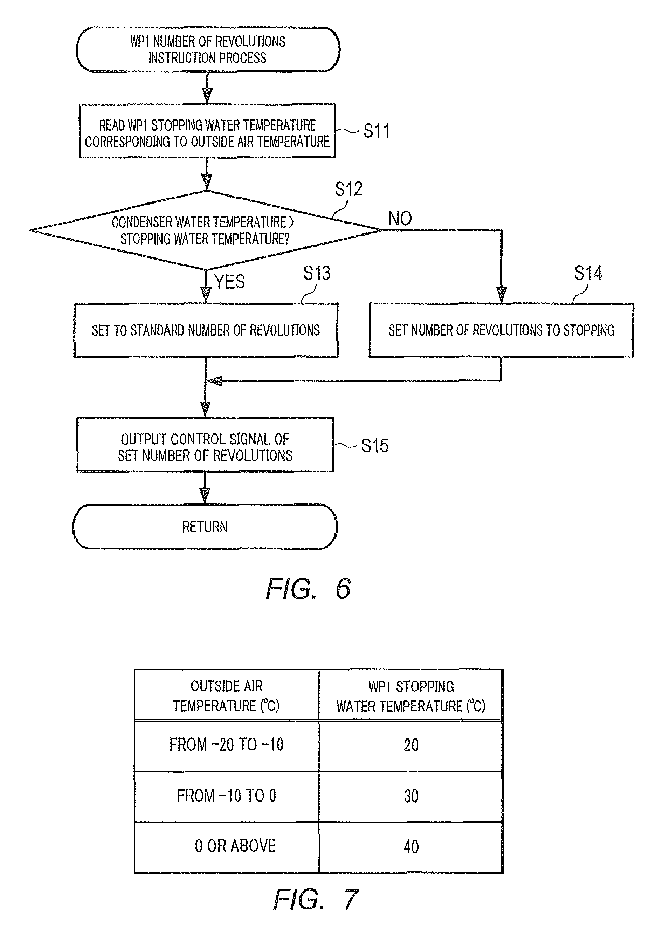

FIG. 6 is a flowchart illustrating a detailed procedure of a process of a "WP1 number of revolutions instruction" in FIG 5. FIG. 7 is a data table illustrating a relationship between an outside air temperature and a WP1 stopping water temperature.

In the process of the WP1 number of revolutions instruction in step S9 in FIG. 5, control section 36 first reads a stopping water temperature of water pump (WP1) 16 corresponding to the outside air temperature from the data table (step S11).

Control section 36 stores, for example, the data table in FIG. 7 in an internal memory. The data table stores information indicating a relationship between an outside air temperature and a stopping water temperature. Here, the water temperature is a temperature of the coolant flowing into sub-condenser 12 and the stopping water temperature indicates a threshold temperature at which water pump 16 is changed from a stopped condition to standard rotation. Note that in the example in FIG. 7, the outside air temperature does not show a range less than -20°C, but the stopping water temperature may also be set in the range less than -20°C as appropriate.

Once reading the stopping water temperature, control section 36 next compares the temperature of the coolant of sub-condenser 12 (called "condenser water temperature") with the stopping water temperature (step S12). If the condenser water temperature is higher, the number of revolutions of water pump 16 is set to a standard number of revolutions (step S 13). The flow rate of the coolant at this time corresponds to a first flow rate. On the other hand, if the condenser water temperature is lower, the number of revolutions of water pump 16 is substantially stopped (substantially flow rate 0) (step S 14). The flow rate of the coolant at this time corresponds to an example of a second flow rate. Suppose that substantial flow rate 0 includes a case where the coolant slightly flows while no driving force is given to water pump 16 due to convection or acceleration of the vehicle or the like.

Next, control section 36 outputs a control signal to the drive circuit of water pump 16 so that water pump 16 is driven at the set number of revolutions (step S15). The process of this WP1 number of revolutions instruction ends.

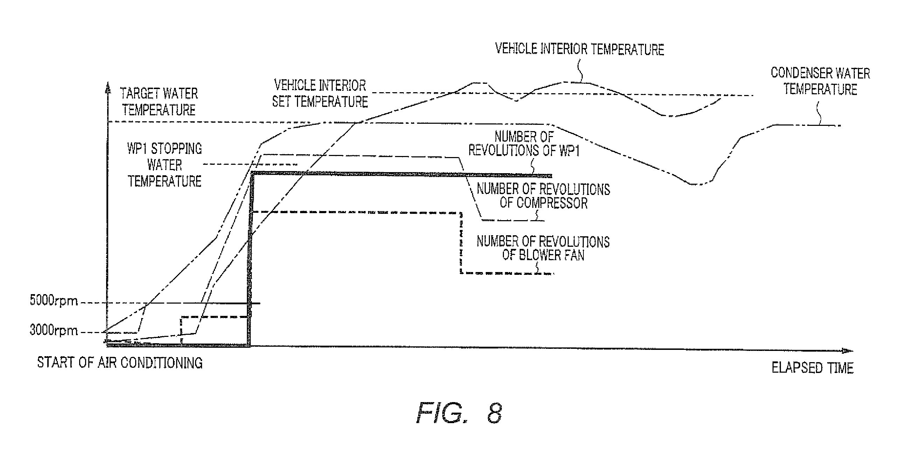

FIG. 8 is a graph for describing an example of an air conditioning control process.

In vehicle air conditioning apparatus 1 of the present embodiment, the air conditioning operation as shown in FIG. 8 is obtained through the aforementioned control process.

For example, when vehicle air conditioning apparatus 1 is activated while the outside air temperature is low, and the coolant and the refrigerant are cool, control section 36 determines these states through the process of compressor number of revolutions instruction (step S7 in FIG. 5) and warms up compressor 38 for a predetermined time period. The periods of "3000 rpm" and "5000 rpm" in FIG. 8 indicate warming-up of compressor 38.

Control section 36 controls water pump 16 in a stopped condition (second flow rate) in the process of WP1 number of revolutions instruction (step S9 in FIG. 5 and FIG. 6) until the condenser water temperature (coolant temperature of sub-condenser 12) exceeds the stopping water temperature.

Such control causes heat to be hardly sent from sub-condenser 12, and warming-up of the heat pump causes the temperature of the refrigerant to speedily rise, and as a result, the temperature of the devices such as compressor 38 mounted in the refrigerant cycle also speedily rises. Thus, the operation of the heat pump can be speedily stabilized.

Once the heat pump starts operating stably, heat is speedily transferred from sub-evaporator 11 to sub-condenser 12 with high efficiency, and therefore the condenser water temperature (coolant temperature of sub-condenser 12) speedily rises. When the condenser water temperature exceeds the WP1 stopping water temperature, water pump (WP1) 16 is driven at a standard number of revolutions.

The state in which water pump 16 is being driven at the standard number of revolutions becomes the standard operation of water pump 16. The standard number of revolutions refers to a number of revolutions at which a heat capacity capable of heating the vehicle interior can be transported from sub-condenser 12 to heater core 44.

When the heat pump operates in a stable operation and water pump 16 operates in the standard operation, heat generated in sub-condenser 12 by the heat pump is transported from sub-condenser 12 to heater core 44 whereby the intake air to be sent into the vehicle interior is heated.

As described above, vehicle air conditioning apparatus 1 of the embodiment can speedily provide heating for the vehicle interior through the above-described operation.

Vehicle air conditioning apparatus 1 of the embodiment changes whether to operate water pump 16 with the drive amount (standard number of revolutions) during standard operation or with the drive amount lower than that during standard operation (e.g., stopped) according to the condenser water temperature. When the condenser water temperature is high at the time of startup, for example, when vehicle air conditioning apparatus 1 is restarted after a short period from an operation end, such control can avoid an unnecessary stop period of water pump 16.

Vehicle air conditioning apparatus 1 of the embodiment changes a threshold temperature (WP1 stopping water temperature) of the condenser water temperature at which the number of revolutions of water pump 16 is changed according to the outside air temperature. This can provide control suited to an outside air temperature, such as supplying warm air into the vehicle interior as early as possible even at a low temperature in the extremely cold seasons.

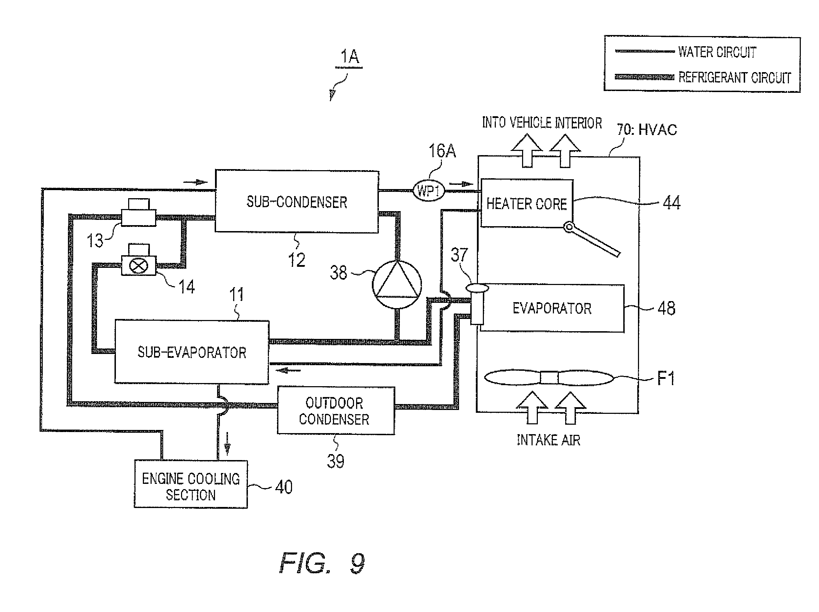

FIG. 9 illustrates a variation of the vehicle air conditioning apparatus of the embodiment.

Note that vehicle air conditioning apparatus 1 of the above-described embodiment may be changed to vehicle air conditioning apparatus 1A in FIG. 9. Vehicle air conditioning apparatus 1A in the variation only differs in the water circuit from the configuration of the embodiment shown in FIG. 4 and is the same in other configuration and control contents.

The water circuit in FIG. 9 is a water circuit that circulates the coolant through engine cooling section 40, sub-condenser 12, heater core 44, and sub-evaporator 11, in the order mentioned, with the flow then returning to engine cooling section 40 again. Water pump 16A is arranged as a flow rate adjusting section at some midpoint of this water circuit.

Even when such a water circuit is adopted, it is possible to provide, via a control process similar to that shown in FIG. 5 and FIG. 6, heating for the vehicle interior with high efficiency even when the outside air temperature is low and much waste heat cannot be obtained from the heat-generating parts of the vehicle.

The embodiment of the present invention has been described so far.

Note that the above embodiment has described a control method that changes whether to operate water pump 16 with the drive amount (standard number of revolutions) during the standard operation or with the drive amount lower than that during the standard operation (e.g., stopped) according to the condenser water temperature as an example. However, for example, when the outside air temperature is low, water pump 16 may be controlled to an amount of drive lower than that during the standard operation for a predetermined time corresponding to the outside air temperature after the startup time and similar effects are also obtained by such control. Alternatively, water pump 16 may be controlled to an amount of drive lower than that during the standard operation during warming-up of the compressor and for a predetermined time after warming-up is completed and similar effects are obtained by such control as well. Controlling water pump 16 to an amount of drive during the standard operation means adjusting the flow rate of the coolant to the first flow rate during the standard operation. Furthermore, controlling water pump 16 to an amount of drive lower than that during the standard operation means adjusting the flow rate of the coolant to a second flow rate lower than the first flow rate.

Stopping (number of revolutions 0) has been illustrated as an amount of drive of water pump 16 lower than that during the standard operation, but the number of revolutions at which a heat capacity capable of providing heating for the vehicle interior cannot be transported from sub-condenser 12 to heater core 44, for example, 25% of the standard number of revolutions or below may be adopted. In other words, a substantially zero flow rate has been illustrated as the second flow rate of the coolant adjusted to be lower than that during the standard operation, a flow rate equal to or less than 25% of the flow rate during the standard operation may be set as the second flow rate. This configuration also produces a similar effect that the heat pump can be set to a stable state more speedily than driving the heat pump at the standard number of revolutions.

The standard number of revolutions of water pump 16 may not be constant, and may be provided in two or multiple stages. That is, the standard number of revolutions may be considered as the number of revolutions at which a heat capacity capable of heating the vehicle interior can be transported from sub-condenser 12 to heater core 44. In other words, the flow rate of the coolant during the standard operation (first flow rate) may not be constant and may be changed in two or multiple stages. That is, the flow rate of the coolant during the standard operation may be considered as a flow rate at which a heat capacity capable of heating the vehicle interior can be transported from sub-condenser 12 to heater core 44.

The above embodiment has described a configuration in which the refrigerant passes through sub-condenser 12 in the cooling mode. However, in the cooling mode, the refrigerant may be switched to a refrigerant circuit in which the refrigerant bypasses sub-condenser 12 and circulates through compressor 38, outdoor condenser 39, expansion valve 37 and evaporator 48.

The above embodiment has described a configuration in which the amount of drive of the water pump is adjusted as an example of the flow rate adjusting section that adjusts the flow rate of the coolant. However, a valve or opening/closing door or the like arranged on the channel may be used as the flow rate adjusting section.

The above embodiment has described an engine as an example of the heat-generating parts of the vehicle. However, various heat-generating parts may be adopted such as a driving electric motor in an electric vehicle and a secondary battery for supplying power for driving, as the heat-generating parts of the vehicle.

Note that the above embodiment has described compressor 38 as a compressor which is driven by electric power such as an electric compressor, and the number of revolutions of which is controllable, but compressor 38 may be a compressor which is driven by engine power. Both a fixed-capacity compressor whose discharge capacity is fixed and a variable-capacity compressor whose discharge capacity is variable may be used as the compressor driven by engine power.

The disclosure of Japanese Patent Application No. 2013-044139, filled on March 6, 2013, including the specification, drawings, and abstract is incorporated herein by reference in its entirety.

### Industrial Applicability

The present invention is applicable to a vehicle air conditioning apparatus to be mounted on various vehicles such as an engine vehicle, an electric automobile and an HEV.

### Reference Signs List

1, 1A Vehicle air conditioning apparatus
11 Sub-evaporator (second water-refrigerant heat exchanger)
12 Sub-condenser (first water-refrigerant heat exchanger)
13 On-off valve
14 Electromagnetic-valve-equipped expansion valve
16, 16A Water pump (flow rate adjusting section)
17 Water pump
36 Control section
37 Expansion valve
38 Compressor
39 Outdoor condenser
40 Engine cooling section
44 Heater core
48 Evaporator
70 HVAC

## Claims

1. A vehicle air conditioning apparatus comprising:
a heater core through which a high-temperature coolant flows and which gives heat to air to be sent into a vehicle interior;
a first water-refrigerant heat exchanger that exchanges heat between the coolant and a high-temperature and high-pressure refrigerant in a heat pump to condense the refrigerant;
a flow rate adjusting section that adjusts a flow rate of the coolant that flows through the first water-refrigerant heat exchanger and the heater core; and
a control section that performs air conditioning control, wherein
the control section controls the flow rate adjusting section to set the flow rate of the coolant to a flow rate lower than a first flow rate for a predetermined time period from starting up of the heat pump, the flow rate being referred to as a second flow rate, the first flow rate being used during a standard operation.

2. The vehicle air conditioning apparatus according to claim 1, wherein the first water-refrigerant heat exchanger circulates the coolant between the first water-refrigerant heat exchanger and the heater core and exchanges heat between the circulated coolant and a high-temperature and high-pressure refrigerant in the heat pump to condense the refrigerant.

3. The vehicle air conditioning apparatus according to claim 2, further comprising:
a part-cooling passage through which the coolant flows in a way that allows heat of the coolant to be exchanged with a heat-generating part of a vehicle; and
a second water-refrigerant heat exchanger that circulates the coolant between the second water-refrigerant heat exchanger and the part-cooling passage and exchanges heat between the circulated coolant and a low-temperature and low-pressure refrigerant in the heat pump to vaporize the refrigerant.

4. The vehicle air conditioning apparatus according to claim 1, further comprising:
a part-cooling passage through which the coolant flows in a way that allows heat of the coolant to be exchanged with a heat-generating part of a vehicle; and
a second water-refrigerant heat exchanger that exchanges heat between the coolant and a low-temperature and low-pressure refrigerant in the heat pump to vaporize the refrigerant, wherein
the coolant circulates through the part-cooling passage, the first water-refrigerant heat exchanger, the heater core and the second water-refrigerant heat exchanger.

5. The vehicle air conditioning apparatus according to any one of claims 1 to 4, wherein the predetermined time period is a time period in which the coolant of the first water-refrigerant heat exchanger rises up to a threshold temperature.

6. The vehicle air conditioning apparatus according to claim 5, wherein the value of the threshold temperature is changed according to an outside air temperature.

7. The vehicle air conditioning apparatus according to any one of claims 1 to 6, wherein the second flow rate is a flow rate which is substantially zero.

8. The vehicle air conditioning apparatus according to claim 3, wherein the second water-refrigerant heat exchanger is connected so as to allow the coolant to circulate between the second water-refrigerant heat exchanger and the part-cooling passage without passing through the heater core.

9. The vehicle air conditioning apparatus according to any one of claims 1 to 8, wherein
the flow rate adjusting section is a water pump, and
the first flow rate and the second flow rate are determined by the number of revolutions of the water pump.
